# EUROPEAN PATENT APPLICATION

(11) **EP 3 069 815 A1**
(43) Date of publication of application: **21.09.2016**
(21) Application number: 14861811.9
(22) Date of filing: 13.03.2014
(51) Int. Cl.: B23K 26/21, B21C 37/00, B23K 103/04

(54) **DEVICE AND METHOD FOR MANUFACTURING WELDED SHAPED STEEL**

(30) Priority: 14.11.2013 JP 2013235989
(71) Applicant: Nisshin Steel Co., Ltd., Tokyo 100-8366 (JP)
(72) Inventor: SAKURADA Yasuhiro, Sakai-shi Osaka 592-8332 (JP); IENARI Tooru, Sakai-shi Osaka 592-8332 (JP); ASADA Hiroshi, Sakai-shi Osaka 592-8332 (JP)
(74) Representative: Betten & Resch
(86) International application number: PCT/JP2014/056632
(87) International publication number: WO 2015/072158

(57) **Abstract**

The present invention makes it easy to keep the appropriate positioning of a web member with respect to flange materials for laser welding, with the holding parts for the web member staying as free as possible from spattering and heating from the laser welding points. The provided device includes a laser welding device that joins the ends of the web member (4) to the flange materials (2), (3), and a roller-type web member holding device (30). This roller-type web member holding device has first surface rollers (31) that are placed at intervals in the conveyance direction and roll along one surface of the web member, and second surface rollers (32) that are placed at intervals in the conveyance direction and roll along the other surface of the web member, and therewith holds the web member (4) over a predefined range in the conveyance direction that at least includes the position of the welding points in the conveyance direction.

## Description

### Technical Field:

The present invention relates to a device and a method for manufacturing welded shaped steel by joining web members and flange materials using laser beam welding.

### Background Art:

Patent documents 1 and 2 describe methods for manufacturing welded H-shaped steel by joining web members and flange materials using laser welding. In the described methods, a web member and two flange materials arranged in an H shape are to be joined in predefined positions using laser welding

When web members and flange materials are joined using laser welding, the irradiation point of the laser beam is fixed, and the laser beam is focused on a spot approximately 0.6 mm in diameter, which requires the precise positioning of the web member with respect to the flange materials. This welding position would be inappropriate if the web member were warped or slanted with respect to the flange materials. In this situation, the laser irradiation could not sufficiently melt the matrix, resulting in insufficient joint strength. In addition, the manufactured product might have undesirable shapes or dimensions. Therefore, when a web member and flange materials are joined using laser welding, the appropriate positioning of the web member with respect to the flange materials is a requirement.

Patent document 3 describes a device for joining three plate materials unrolled from coils and arranged in an H shape using high-frequency resistance welding. The described device is provided with a supporting device that supports both surfaces of the web member. This supporting device is composed of endless belts that rotate while following the web member moving in the line direction. According to patent document 3, the supporting device retains the web member in the welding part so the web member cannot escape to the side in the thickness direction, thus preventing unsuccessful welding.

### Citation List:

### Patent Literature:

| | |
|---|---|
| Patent document 1 | Japanese Patent No. 5110642 |
| Patent document 2 | Japanese Unexamined Patent Application Publication No. 2011-83781 |
| Patent document 3 | Japanese Examined Patent Publication No. H3-4316 |

### Summary of Invention:

### Technical Problem:

When a web member and flange materials are joined using laser welding to manufacture welded H-shaped steel, the use of a supporting device composed of endless belts according to patent document 3 is a workable way to maintain the appropriate positioning of the web member with respect to the flange materials.

However, the areas around the welding points are exposed to significant spattering and heating from the welding points. Therefore, the use of a supporting device according to patent document 3 imposes some practical conditions: the endless belts must be made of metal or other suitable material, and they must be narrow and positioned in the middle of the web member in the width directions to ensure appropriate distancing from the welding points.

However, the narrow endless belts positioned in the middle of the web member in the width directions have difficulty correcting a slant of the web member with respect to the flange materials, and are more likely to fail to maintain the appropriate positioning of the web member with respect to the flange materials.

The present invention provides a device and a method for manufacturing welded shaped steel so that the web member is held in areas that are as free as possible from spattering and heating from the laser welding points, while still making it easy to maintain the appropriate positioning of the web member with respect to the flange materials.

### Solution to Problem:

The welded shaped steel manufacturing device according to the present invention fundamentally comprises a plate conveying device that conveys a web member and two flange materials, with the web member positioned to be sandwiched between and perpendicular to the flange materials, which are arranged parallel to each other, and a laser welding device that joins the ends of the web member to the contact parts of the flange materials using laser welding on the conveyance route of the web member and the flange materials in the plate conveying device. On these fundamentals, said plate conveying device includes a web member holding device that has a first set of surface rollers, which are placed at intervals in the conveyance direction and roll along one surface of said web member so as not to block the laser beams directed toward the welding points, and a second set of surface rollers, which are placed at intervals in the conveyance direction and roll along the other surface of said web member so as not to block the laser beams directed toward the welding points, and thereby holds said web member over a predefined range in the conveyance direction that at least includes the position of the welding points in the conveyance direction.

The welded shaped steel manufacturing device thus constructed maintains the appropriate positioning of a web member with respect to flange materials by holding the web member between the upper rollers and the lower rollers. The contact length between the rollers and the web member can be selected individually, and the mounting positions of the rollers can be defined individually, which would be impossible for endless belts. Therefore, within the range in the conveyance direction that is easily subjected to spattering and heating from the welding points, rollers can be positioned closer to the centerline of the web member, that is, farther from the welding points. Meanwhile, outside that range, rollers can be positioned as close as possible to the ends of the web member to hold the web member. Thus, the web member is held in areas as free as possible from spattering and heating from the welding points, still making it easy to maintain the appropriate positioning of the web member with respect to the flange materials.

Said web member holding device preferably has a first supporting frame that is placed on one side of said web member along its centerline and supports said first surface rollers on both sides of the supporting frame, and a second supporting frame that is placed on the other side of said web member along its centerline and supports said second surface rollers on both sides of the supporting frame.

The ends of said first surface rollers and said second surface rollers facing said flange materials can, for example, be positioned along the borders of the areas where the degree of spattering from the welding points is over a predefined value.

In the welded shaped steel manufacturing device thus constructed, the predefined value mentioned above can be set at 0, for example. In this setting, all rollers are almost free from spattering, still making it easy to maintain the appropriate positioning of the web member with respect to the flange materials.

The welded shaped steel manufacturing method according to the present invention manufactures welded shaped steel by conveying a web member and two flange materials, with the web member positioned to be sandwiched between and perpendicular to the flange materials arranged parallel to each other, and joining the ends of the web member to the contact parts of the flange materials using laser welding on the conveyance route of the web member and the flange materials. In this welded shaped steel manufacturing method, said welding is performed while said web member is held by first surface rollers, which are placed at intervals in the conveyance direction and roll along one surface of said web member so as not to block the laser beams directed toward the welding points, and second surface rollers, which are placed at intervals in the conveyance direction and roll along the other surface of said web member so as not to block the laser beams directed toward the welding points, over a predefined range in the conveyance direction that at least includes the position of the welding points in the conveyance direction.

In this welded shaped steel manufacturing method, the preference is that said first surface rollers are supported on both sides of a first supporting frame that is placed on one side of said web member along its centerline, and said second surface rollers are supported on both sides of a second supporting frame that is placed on the other side of said web member along its centerline.

In this welded shaped steel manufacturing method, the ends of said first surface rollers and said second surface rollers facing said flange materials can, for example, be positioned along the borders of the areas where the degree of spattering from the welding points is over a predefined value.

### Advantageous Effects of Invention:

The present invention makes it easy to maintain the appropriate positioning of a web member with respect to flange materials for laser welding, with the holding parts for the web member staying as free as possible from spattering and heating from the laser welding points.

### Brief Description of Drawings:

Figure 1 is an overall view of a welded shaped steel manufacturing device with the conveyance direction of a web member and flange materials (hereafter occasionally referred to as "the conveyance direction") from right to left. The flange material on the near side and everything in front of it are not illustrated.
Figure 2 is a plan view of a roller-type web member holding device from the upper side, also showing an upper belt-type web member holding device. The upper side here means the side of the web member (4) in Figure 1 on which the laser welding device (200) is placed.
Figure 3 is a plan view of the roller-type web member holding device from the lower side, also showing a lower belt-type web member holding device. The lower side here means the other side of the web member (4).
Figure 4 is a plan view of belt-type driving devices.
Figure 5 is a cross-sectional view from the left side of lines AB and CD in Figure 1, leaving guide rolls not illustrated.
Figure 6 is a cross-sectional view from the left side of lines E in Figure 1.
Figure 7A is a cross-sectional view of a first supporting frame supporting first surface rollers, showing an example of the supporting structure.
Figure 7B is a cross-sectional view of a first supporting frame supporting first surface rollers, showing another example of the supporting structure.
Figure 7C is a cross-sectional view of a first supporting frame supporting first surface rollers, showing still another example of the supporting structure.
Figure 8A is a view of a web member and laser heads with the conveyance direction from right to left.
Figure 8B is a top view showing a web member, flange materials, and laser heads.
Figure 9 is a schematic view showing belt-type web member holding devices, a roller-type web member holding device, and device frames supporting them and the guide rolls.

### Description of Embodiments:

Below is a description of a device and a method for manufacturing welded shaped steel in an embodiment of the present invention. In this embodiment, three steel plates already formed according to predefined dimensions through cutting and other processes and arranged so as to make an H-shaped cross-section are supplied to manufacture H-shaped steel. The conveyance direction of the flange materials (2), (3) and the web member (4) will be referred to as the "conveyance direction.'' and the upstream side and the downstream side in the conveyance direction as the "upstream side" and the "downstream side."

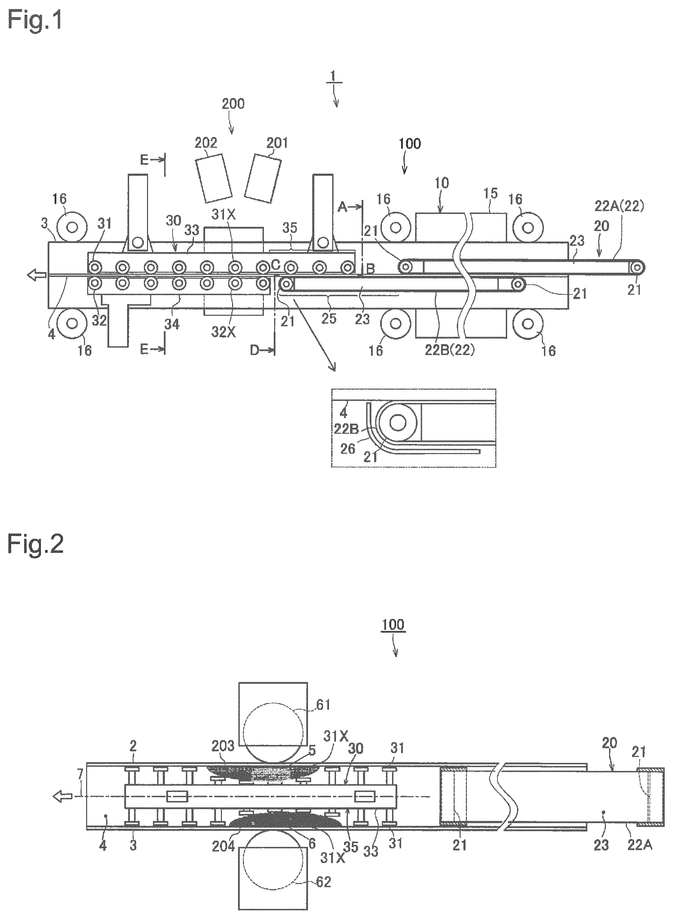

As shown in Figures 1-4, the welded shaped steel manufacturing device (1) is composed mainly of a plate conveying device (100) and a laser welding device (200).

The plate conveying device (100) includes belt-type driving devices (10), belt-type web member holding devices (20), and a roller-type web member holding device (30), among other items.

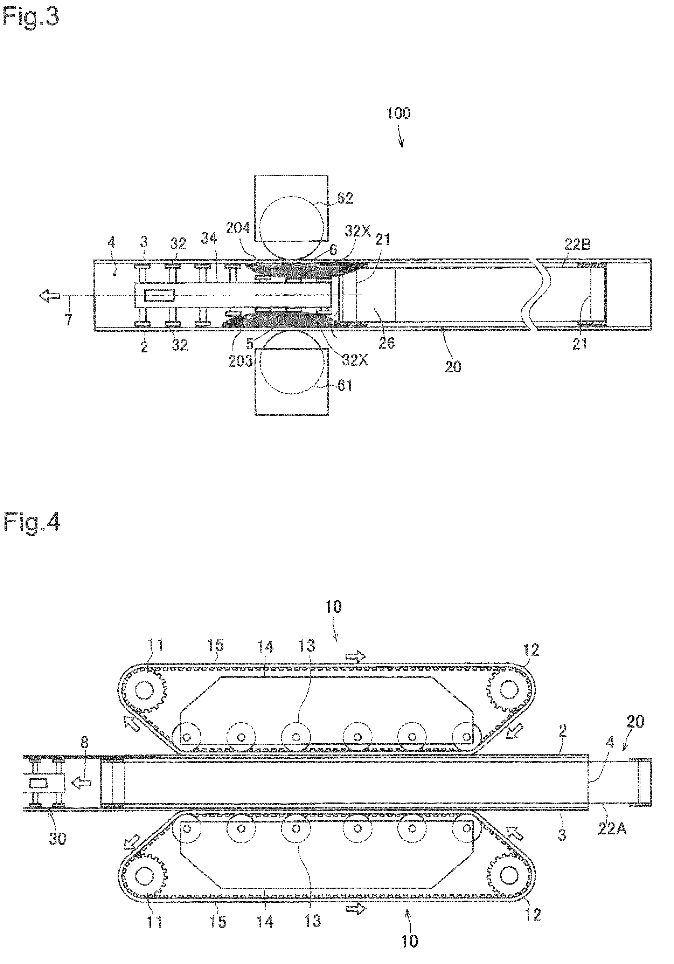

As shown in Figure 4, the belt-type driving device (10) comprises a driver gear wheel (11) and an idler gear wheel (12) making a front-back pair in the conveyance direction, auxiliary gear wheels (13) arranged in line between those gear wheels (11), (12), a supporting frame (14) that supports the auxiliary gear wheels (13) so that these can rotate, and a resin-made endless belt (15) winding around the gear wheels (11)-(13). The endless belt (15) has inner teeth engaging with outer teeth formed on the gear wheels (11)-(13).

These belt-type driving devices (10) are placed on both sides of the conveyance route of flange materials (2), (3) and a web member (4), one device on each side. The flange materials (2), (3) and the web member (4) are arranged in an H shape, and the surfaces of the flange materials (2), (3) not facing the web member (4) are pressed by the endless belts (15). In Figure 4, the endless belts (15) rotate as the cycling arrows show, sandwiching the flange materials (2), (3) and the web member (4) arranged in an H shape, thus conveying these materials in the direction of the arrow (8). The distance between the endless belts (15) of the belt-type driving devices (10) can be regulated according to the size of the H-shaped steel to be manufactured. As shown in Figure 1, upper and lower guide rolls (16) are provided before and after the endless belts (15) in the conveyance direction so that the flange materials (2), (3) do not deviate upward or downward.

There is another pair of belt-type driving devices (10) (not illustrated) downstream of the roller-type web member holding device (30) to be described below, sandwiching the conveyance route of H-shaped steel.

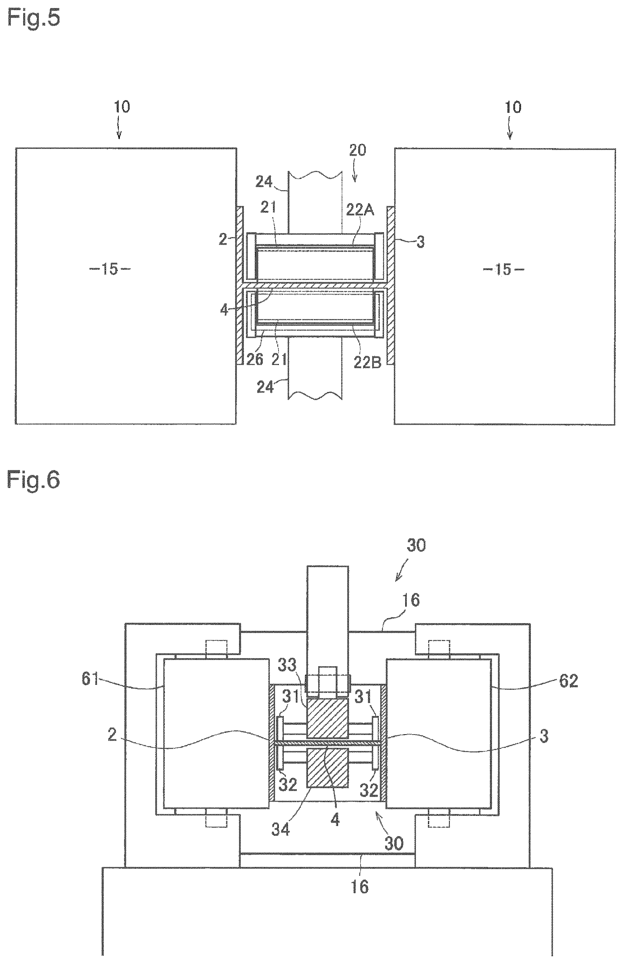

As shown in Figures 1 and 5, the belt-type web member holding devices (20) comprise a front roller and a back roller (21) in the conveyance direction, a web member holding belt (22) consisting of a resin-made endless belt winding around the two rollers (21), and a supporting plate (23) that is placed between the two rollers (21) and supports the web member holding belt (22) from its back side, and supporting frames (24) (see Figure 5). The supporting frames (24) support the two rollers (21) and the supporting plate (23) so that the two rollers (21) can rotate freely.

The belt-type web member holding devices (20) are placed on both sides (upper and lower sides) of the web member (4), one device on each side. The web member holding belts (22) of the belt-type web member holding devices (20) hold the web member (4) in its thickness directions. Because the two rollers (21) are idler rollers, the web member holding belts (22) rotate around the two rollers (21) following the web member (4) moving forward while sandwiched between the flange materials (2), (3). The height position of the web member holding belt (22) placed on the upper side of the web member (4) can be regulated according to the desired size of the H-shaped steel to be manufactured. Hereafter, the web member holding belt (22) placed on the upper side (one side) of the web member (4) will be referred to as the "upper web member holding belt" (22A), and the web member holding belt (22) placed on the lower side (the other side) of the web member (4) as the "lower web member holding belt" (22B).

As shown in the enlarged view in Figure 1, the downstream side end of the lower web member holding belt (22B) is provided with a cover (26). This cover (26) has a form that is designed to block spatter that flies directly from the welding point located on the downstream side or that bounces back from some component, and is made of a heat-resistant material such as metal. The cover (26) sufficiently protects the resin belt (22B) from the heat of spatter. The reason the lower web member holding belt (22B) extends further than the upper web member holding belt (22A) on the downstream side will be given later. If necessary, the downstream side end of the upper web member holding belt (22A) can also be covered.

As shown in Figures 1-3 and 6, the roller-type web member holding device (30) comprises rollers (31) that rotate along the upper surface (one surface) of the web member (4) in the conveyance direction (hereafter referred to as the "first surface rollers" (31)), rollers (32) that rotate along the lower surface (the other surface) of the web member (4) in the conveyance direction (hereafter referred to as the "second surface rollers" (32)), a first supporting frame (33) that supports the first surface rollers (31), and a second supporting frame (34) that supports the second surface rollers (32). The first supporting frame (33) extends along the centerline (7) of the web member (4) in the conveyance direction as far as predefined, and supports the first surface rollers (31) placed at intervals in the conveyance direction on both sides of the supporting frame (33). The second supporting frame (34) also extends along the centerline (7) of the web member (4) in the conveyance direction as far as predefined (shorter than the first supporting frame (33) in this embodiment), and supports the second surface rollers (32) placed at intervals in the conveyance direction on both sides of the supporting frame (34). The rollers (31), (32) and the supporting frames (33), (34) mentioned above are placed so as not to block the laser beams directed toward the welding points (5), (6). The rollers (31), (32) and the supporting frames (33), (34) are made of a heat-resistant material such as metal.

With the first surface rollers (31) and the second surface rollers (32), the roller-type web member holding device (30) holds the web member (4) in its thickness directions over a predefined range in the conveyance direction that at least includes the position of the welding points (5), (6) in the conveyance direction. To minimize the slant of the web member (4) with respect to the flange materials (2), (3) in the position of the welding points (5), (6) in the conveyance direction, there are first surface rollers (31X) and second surface rollers (32X) on both sides of the centerline (7) (two rollers on each surface of the web member (4)) in the position of the welding points (5), (6) in the conveyance direction.

The ends of the first surface rollers (31) and the second surface rollers (32) facing the flange materials (2), (3) are positioned along the borders of the areas where the degree of spattering from the welding points (5), (6) is over a predefined value. The degree of spattering here can be defined as the amount (mass) of spatter per unit area that attaches to the upper or lower surface of the web member (4) within a certain welding time. In this embodiment, the predefined value mentioned above is zero. This means that the ends of the first surface rollers (31) and the second surface rollers (32) facing the flange materials (2), (3) are positioned along the borders of the areas (203), (204) where spatter can fly irrespective of the amounts. As shown in Figures 2 and 3, the rollers (31), (32) placed outside the spattering range in the conveyance direction are positioned as close as possible to the ends of the web member (4) to minimize the slant of the web member (4) with respect to the flange materials (2), (3).

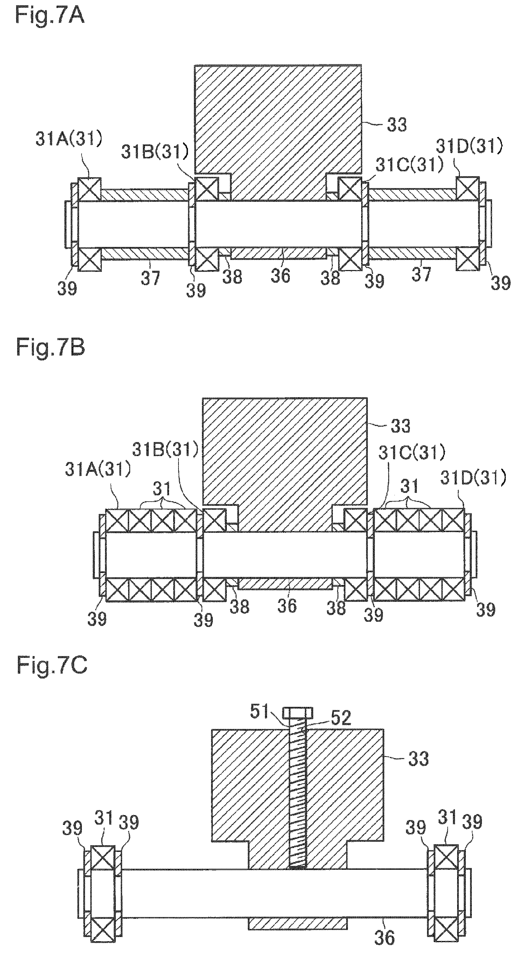

Figure 7A shows an example of a supporting structure for the first surface rollers (31). The first surface rollers (31) adopt a ball bearing, and the supporting frame (33) is penetrated by a shaft (36) lying horizontally and perpendicular to the conveyance direction. The shaft (36) has four first surface rollers (31A)-(31D) fitted at intervals. Cylindrical collars (37) are fitted around the shaft (36) between the first roller (31A) and the second roller (31B), and between the third roller (31C) and the fourth roller (31D). In addition, short cylindrical collars (38) are fitted around the shaft (36) between the second roller (31 B) and one lateral surface of the first supporting frame (33), and between the third roller (31C) and the other lateral surface of the first supporting frame (33). Moreover, snap rings (39) are fitted into circumferential grooves formed in predefined positions of the shaft (36) to fix the positions of the rollers (31A)-(31D) in their axial directions with respect to the first supporting frame (33). As shown in Figure 7B, the collars (37) may be replaced by a series of first surface rollers (31) arranged side by side. In the example in Figure 7B, the contact length between the first surface rollers (31) and the web member (4) is four times greater than in the example in Figure 7A.

The supporting structure for the second surface rollers (32) can be constructed in the same way as the supporting structure for the first surface rollers (31). This needs no further description.

In this embodiment, as shown in Figure 1, the first supporting frame (33) extends further than the second supporting frame (34) by a predefined length on the upstream side, and the elongated part (35) also has rollers (31). Meanwhile, in the belt-type web member holding devices (20), the lower web member holding belt (22B) extends further than the upper web member holding belt (22A) on the downstream side, and this elongated part (25) and the rollers (31) in the elongated part (35) of the first supporting frame (33) sandwich the web member (4) in its thickness directions. On the lower side of the web member (4), as compared to the upper side, the spattering area is narrower due to the fall of spatter, which makes it possible that the lower web member holding belt (22B), with the cover (26) mentioned earlier on its downstream side end, extends further than the upper web member holding belt (22A), thus approaching the welding points (5), (6). This construction may improve the quality of the H-shaped steel. The reason is that the rollers (32) support the web member (4) through line contact, whereas the web member holding belt (22B) supports the web member (4) through plane contact, and therefore is less likely to leave defects on the surface of the web member (4). It is also possible that the upstream side end of the first supporting frame (33) and the upstream side end of the second supporting frame (34) take the same position in the conveyance direction, and that the downstream side end of the upper web member holding belt (22A) and the downstream side end of the lower web member holding belt (22B) take the same position in the conveyance direction. If appropriate, the cover (26) may be provided on the downstream side end of the upper web member holding belt (22A) or on the downstream side end of the lower web member holding belt (22B) or on both of these downstream side ends.

As shown in Figures 2 and 3, the surfaces of the flange materials (2), (3) not facing the web member (4) are pressed by a pair of squeeze rolls (61), (62) from both sides in the areas around the welding points (5), (6). The distance between these squeeze rolls (61), (62) can be regulated according to the size of the H-shaped steel to be manufactured.

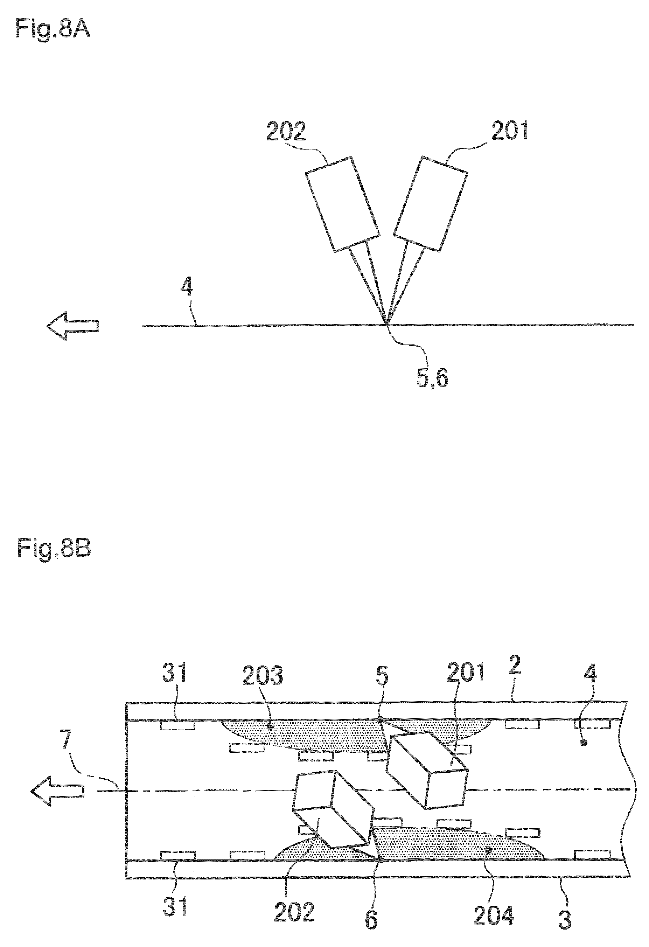

The laser welding device (200) joins the ends of the web member (4) to the contact parts of the flange materials (2), (3) using laser welding on the conveyance route of the flange materials (2), (3) and the web member (4). In this embodiment, the laser welding device (200) emits laser beams from two laser heads (201), (202) placed on the upper side (one side) of the web member (4). Although the welding points (5), (6) are in the same position in the conveyance direction, the laser heads (201), (202) that irradiate those welding points (5), (6) have different irradiation directions to prevent interference between the laser heads (201), (202). Figure 8 shows an example in which the laser head (201) that joins one end of the web member (4) to one flange material (2) has an irradiation direction inclined to the downstream side in the conveyance direction and simultaneously toward the flange material (2), and the laser head (6) that joins the other end of the web member (4) to the other flange material (3) has an irradiation direction inclined to the upstream side in the conveyance direction and simultaneously toward the flange material (3). Thus, the two welding points (5), (6) located in the same position in the conveyance direction form two spattering areas asymmetrical with respect to the centerline (7) of the web member (4), specifically a spattering area (203) created from the welding point (5) by the laser head (5) and a spattering area (204) created from the welding point (6) by the laser head (202).

The above-described arrangement of the laser heads (201), (202) is not the only one for creating two spattering areas (203), (204) asymmetrical with respect to the centerline (7) of the web member (4). If the laser heads (201), (202) are arranged asymmetrically with respect to the plane that includes the centerline (7) and is perpendicular to the surfaces of the web member (4), two welding points located in the same position in the conveyance direction form two spattering areas (203), (204) asymmetrical with respect to the centerline (7) of the web member (4). Two welding points (5), (6) located in different positions in the conveyance direction also form two spattering areas (203), (204) asymmetrical with respect to the centerline (7) of the web member (4).

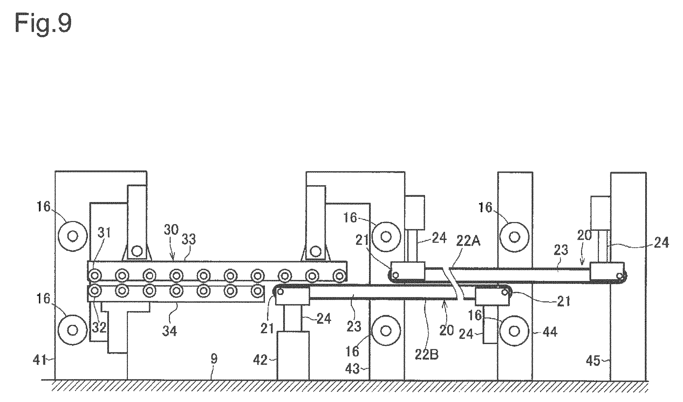

Figure 9 is a schematic diagram showing an example of the supporting structure for the belt-type web member holding devices (20), the roller-type web member holding device (30), and the guide rolls (16). The supporting frames (24) of the belt-type web member holding device (20) placed on the upper side of the web member (4) are supported by device frames (43), (45) respectively, provided with a jack or other mechanisms (not illustrated) that can regulate the height of the part including the upper web member holding belt (22A). The supporting frames (24) of the belt-type web member holding device (20) placed on the lower side of the web member (4) are supported by device frames (42), (44), respectively. The first supporting frame (33) of the roller-type web member holding device (30) is supported by the device frame (43) and another device frame (41), provided with a jack or other mechanisms (not illustrated) that can regulate the height of the first supporting frame (33). The second supporting frame (34) of the roller-type web member holding device (30) is supported by the device frame (41). The guide rolls (16) are supported by the device frames (41), (43), (44) so that they can freely rotate. In particular, the upper guide rolls (16) that hold the upper ends of the flange materials (2), (3) are supported by the device frames (41), (43), (44) so that the height position of those upper guide rolls (16) can be regulated.

The welded shaped steel manufacturing device (1) constructed as described above manufactures H-shaped steel as follows: Flange materials (2), (3) and a web member (4) arranged so as to make an H-shaped cross-section are supplied from the upstream side to the belt-type driving devices (10) and the belt-type web member holding devices (20), rotating the endless belts (15) of the belt-type driving devices (10). Then the endless belts (15) of the belt-type driving devices (10) convey the flange materials (2), (3) and the web member (4) arranged in an H shape to the roller-type web member holding device (30).

When the flange materials (2), (3) and the web member (4) reach the roller-type web member holding device (30), the web member (4) is sandwiched between the first and second surface rollers (31), (32) from above and below in a certain range including the position of the welding points (5), (6) in the conveyance direction, and the flange materials (2), (3) are sandwiched between the squeeze rolls (61), (62) from right and left in the vicinity of the welding points (5), (6). In this sandwiched state, the ends of the web member (4) are joined to the flange materials (2), (3) by the laser welding device (200).

The flange materials (2), (3) and the web member (4) joined using laser welding are conveyed by the roller-type web member holding device (30) and then by another pair of belt-type driving devices to the downstream side before these materials are subjected to predefined treatments (ex. correction of welding distortion and soot removal).

In the welded shaped steel manufacturing device (1) and method in the above-described embodiment of the present invention, the web member (4) is sandwiched between and supported by the upper and lower rollers (31), (32), maintaining the appropriate positioning of the web member (4) with respect to the flange materials (2), (3). The contact length between the rollers and the web member can be individually selected. In addition, the mounting positions of the rollers can be individually defined. Therefore, within the range in the conveyance direction that is easily subjected to spattering and heating from the welding points (5), (6), rollers (31), (32) can be positioned closer to the centerline (7) of the web member (4), that is, farther from the welding points (5), (6). Meanwhile, outside that range, rollers (31), (32) can be positioned as close as possible to the ends of the web member (4) to hold the web member (4). Thus, the web member (4) is held by the rollers (31), (32) in areas as free as possible from spattering and heating from the welding points (5), (6), still making it easy to maintain the appropriate positioning of the web member (4) with respect to the flange materials (2), (3). This would be impossible if the web member were held by endless belts as in the previous examples.

In the welded shaped steel manufacturing device (1) in the embodiment of the present invention, the ends of the first and second surface rollers (31), (32) facing the flange materials (2), (3) are positioned along the borders of the spattering areas (203), (204). Thus, the rollers (31), (32) take positions as close as possible to the ends of the web member (4) to hold the web member (4), staying almost free from spatter flying from the welding points (5), (6).

### Other embodiments

In the above-described embodiment, the ends of the first and second surface rollers (31), (32) facing the flange materials (2), (3) are positioned along the borders of the areas where the degree of spattering from the welding points (5), (6) is over a predefined value (zero). However, these ends may instead be positioned along the borders of the areas where the degree of heat influence from the welding points (5), (6) is over a predefined value. The degree of heat influence here can be defined as the amount of heat that the rollers (31), (32) receive in the positions in question from the heat sources within a certain time during laser welding. The areas where the degree of heat influence from the welding points (5), (6) is over a predefined value may, for example, be the areas where the temperature of the rollers (31), (32) goes above the maximum allowable temperature.

In the original embodiment, the web member (4) is held by the belt-type web member holding devices (20) on the upstream side and by the roller-type web member holding device (30) on the downstream side. However, it is also possible that the belt-type web member holding devices (20) are excluded, and that the roller-type web member holding device (30) alone holds the web member (4) on the upstream and downstream sides.

In Figure 1, the laser heads (201), (202) are both placed on the upper side of the web member (4). However, those laser heads may be placed on different sides of the web member (4).

In the attached figures, the first surface rollers (31) are in the same positions as the second surface rollers (32) when viewed from above. However, these rollers may also be positioned differently when viewed from above.

In the original embodiment, as shown in Figures 7A and 7B, the shaft (36) is fixed in its axial directions with respect to the supporting frame (33). However, the shaft (36) may be shiftable in the axial directions with respect to the supporting frame (33). Figure 7C shows an example in which the supporting frame (33) has a threaded hole (52) that leads from the outside to the shaft (36) lying horizontally and perpendicular to the conveyance direction and thus penetrating the supporting frame (33), so that a bolt (51) is driven into the threaded hole (52) to fix the position of the shaft (36) in the axial directions. Such a construction is convenient for arranging two rollers (31) asymmetrically with respect to the centerline (7). The construction can also be adopted for the second supporting frame (34) and the second surface rollers (32).

### Industrial Applicability:

The present invention can, for example, be applied to a device and a method for manufacturing welded H-shaped steel.

### Reference Signs List:

- 1: Welded shaped steel manufacturing device
- 2: Flange material
- 3: Flange material
- 4: Web member
- 5: Welding point
- 6: Welding point
- 7: Centerline of the web member
- 30: Roller-type web member holding device (web member holding device)
- 31: First surface rollers
- 32: Second surface rollers
- 33: First supporting frame
- 34: Second supporting frame
- 100: Plate conveying device
- 200: Laser welding device
- 203: Spattering area
- 204: Spattering area

## Claims

1. A welded shaped steel manufacturing device comprising: a plate conveying device that conveys a web member and two flange materials, with the web member positioned to be sandwiched between and perpendicular to the flange materials arranged parallel to each other; and a laser welding device that joins the ends of the web member to the contact parts of the flange materials using laser welding on the conveyance route of the web member and the flange materials in the plate conveying device, wherein said plate conveying device includes a web member holding device that has first surface rollers that are placed at intervals in the conveyance direction and roll along one surface of said web member so as not to block the laser beams directed toward the welding points, and second surface rollers that are placed at intervals in the conveyance direction and roll along the other surface of said web member so as not to block the laser beams directed toward the welding points, and therewith holds said web member over a predefined range in the conveyance direction that at least includes the position of the welding points in the conveyance direction.

2. The welded shaped steel manufacturing device according to claim 1, wherein said web member holding device has a first supporting frame that is placed on one side of said web member along its centerline and supports said first surface rollers on both sides of the supporting frame, and a second supporting frame that is placed on the other side of said web member along its centerline and supports said second surface rollers on both sides of the supporting frame.

3. The welded shaped steel manufacturing device according to claim 1 or claim 2, wherein the ends of said first surface rollers and said second surface rollers facing said flange materials are positioned along the borders of the areas where the degree of spattering from the welding points is over a predefined value.

4. A welded shaped steel manufacturing method that manufactures welded shaped steel by conveying a web member and two flange materials, with the web member positioned to be sandwiched between and perpendicular to the flange materials arranged parallel to each other, and joining the ends of the web member to the contact parts of the flange materials using laser welding on the conveyance route of the web member and the flange materials, wherein said welding is performed while said web member is held by first surface rollers that are placed at intervals in the conveyance direction and roll along one surface of said web member so as not to block the laser beams directed toward the welding points, and second surface rollers that are placed at intervals in the conveyance direction and roll along the other surface of said web member so as not to block the laser beams directed toward the welding points, over a predefined range in the conveyance direction that at least includes the position of the welding points in the conveyance direction.

5. The welded shaped steel manufacturing method according to claim 4, wherein said first surface rollers are supported on both sides of a first supporting frame that is placed on one side of said web member along its centerline, and said second surface rollers are supported on both sides of a second supporting frame that is placed on the other side of said web member along its centerline.

6. The welded shaped steel manufacturing method according to claim 4 or claim 5, wherein the ends of said first surface rollers and said second surface rollers facing said flange materials are positioned along the borders of the areas where the degree of spattering from the welding points is over a predefined value.

## Amended claims

### Amended claims under Art. 19.1 PCT

**1.** currently amended) A welded shaped steel manufacturing device comprising: a plate conveying device that conveys a web member and two flange materials, with the web member positioned to be sandwiched between and perpendicular to the flange materials arranged parallel to each other; and a laser welding device that joins the ends of the web member to the contact parts of the flange materials using laser welding on the conveyance route of the web member and the flange materials in the plate conveying device, wherein said plate conveying device includes a web member holding device that has first surface rollers that are placed at intervals in the conveyance direction and roll along one surface of said web member so as not to block the laser beams directed toward the welding points, and second surface rollers that are placed at intervals in the conveyance direction and roll along the other surface of said web member so as not to block the laser beams directed toward the welding points, and therewith holds said web member over a predefined range in the conveyance direction that at least includes the position of the welding points in the conveyance direction; and the ends of said first surface rollers and said second surface rollers facing said flange materials are positioned along the borders of the areas where the degree of spattering from the welding points is over a predefined value.

**2.** currently amended) A welded shaped steel manufacturing device comprising: a plate conveying device that conveys a web member and two flange materials, with the web member positioned to be sandwiched between and perpendicular to the flange materials arranged parallel to each other; and a laser welding device that joins the ends of the web member to the contact parts of the flange materials using laser welding on the conveyance route of the web member and the flange materials in the plate conveying device, wherein said plate conveying device includes a web member holding device that has first surface rollers that are placed at intervals in the conveyance direction and roll along one surface of said web member so as not to block the laser beams directed toward the welding points, and second surface rollers that are placed at intervals in the conveyance direction and roll along the other surface of said web member so as not to block the laser beams directed toward the welding points, and therewith holds said web member over a predefined range in the conveyance direction that at least includes the position of the welding points in the conveyance direction; and the ends of said first surface rollers and said second surface rollers facing said flange materials are positioned along the borders of the areas where the degree of heat influence from the welding points is over a predefined value.

**3.** currently amended) A welded shaped steel manufacturing method that manufactures welded shaped steel by conveying a web member and two flange materials, with the web member positioned to be sandwiched between and perpendicular to the flange materials arranged parallel to each other, and joining the ends of the web member to the contact parts of the flange materials using laser welding on the conveyance route of the web member and the flange materials, wherein said welding is performed while said web member is held by first surface rollers that are placed at intervals in the conveyance direction and roll along one surface of said web member so as not to block the laser beams directed toward the welding points, and second surface rollers that are placed at intervals in the conveyance direction and roll along the other surface of said web member so as not to block the laser beams directed toward the welding points, over a predefined range in the conveyance direction that at least includes the position of the welding points in the conveyance direction; and the ends of said first surface rollers and said second surface rollers facing said flange materials are positioned along the borders of the areas where the degree of spattering from the welding points is over a predefined value.

**4.** currently amended) A welded shaped steel manufacturing method that manufactures welded shaped steel by conveying a web member and two flange materials, with the web member positioned to be sandwiched between and perpendicular to the flange materials arranged parallel to each other, and joining the ends of the web member to the contact parts of the flange materials using laser welding on the conveyance route of the web member and the flange materials, wherein said welding is performed while said web member is held by first surface rollers that are placed at intervals in the conveyance direction and roll along one surface of said web member so as not to block the laser beams directed toward the welding points, and second surface rollers that are placed at intervals in the conveyance direction and roll along the other surface of said web member so as not to block the laser beams directed toward the welding points, over a predefined range in the conveyance direction that at least includes the position of the welding points in the conveyance direction; and the ends of said first surface rollers and said second surface rollers facing said flange materials are positioned along the borders of the areas where the degree of heat influence from the welding points is over a predefined value.

**5.** (canceled)

**6.** (canceled)
Statement under Article 19 (1)
The invention in the amended claims 1 and 3 is identical to that in the pre-amendment claims 3 and 6 that are dependent on the pre-amendment claims 1 and 4.
Documents 6 and 7 do not describe how to distance the rollers from the welding torches far enough to avoid the attachment of spatter. They also do not show the positioning of the rollers with respect to the welding torches. Thus, documents 6 and 7 have not given any basis that would easily lead to the construction according to the present invention described in claims 1 and 6: "the ends of said first surface rollers and said second surface rollers facing said flange materials are positioned along the borders of the areas where the degree of spattering from the welding points is over a predefined value."
The invention in claims 2 and 4 is based on the description in paragraph [0044] of the specification.
None of documents 1-7 describes or implies the construction according to the present invention described in claims 2 and 4: "the ends of said first surface rollers and said second surface rollers facing said flange materials are positioned along the borders of the areas where the degree of heat influence from the welding points is over a predefined value." The predefined value described in claims 2 and 4 may, for example, be based on the maximum allowable temperature for the rollers. Thus, the holding rollers stay almost free from the harmful influence of heat and maintain the appropriate positioning of the web member to the greatest extent possible.
